# EUROPEAN PATENT SPECIFICATION

(11) **EP 0 524 258 B1**
(45) Date of publication and mention of the grant of the patent: **11.09.1996**
(21) Application number: 91908325.3
(22) Date of filing: 12.04.1991
(51) Int. Cl.: G06F 19/00

(54) **NOISE CANCELLATION ARRANGEMENT**
ANORDNUNG ZUR RAUSCHUNTERDRÜCKUNG
DISPOSITIF D'ELIMINATION DES BRUITS PARASITES

(30) Priority: 12.04.1990 US 508304
(43) Date of publication of application: 27.01.1993
(73) Proprietor: ROSENTHAL, Felix, Annandale, VA 22003 (US)
(72) Inventor: ROSENTHAL, Felix, Annandale, VA 22003 (US)
(74) Representative: Lawrence, John Gordon
(86) International application number: US9102530
(87) International publication number: WO9115995

(56) References cited:
- GB-A- 1 073 668
- US-A- 4 211 237
- US-A- 4 421 121
- US-A- 4 422 459
- US-A- 4 556 962
- US-A- 4 601 006
- US-A- 4 630 246
- US-A- 4 760 540
- US-A- 4 781 200
- US-A- 4 783 600
- US-A- 5 042 499

## Description

### Background of the Invention

The present invention relates to cancellation of noise signals from a detected signal and more particularly relates to cancellation of unknown noise using a plurality of reference sensors.

The problem of obtaining a true representation of a source signal occurring in a noisy environment occurs in a variety of circumstances, for example in the detection of sonar or seismographic signals and in the detection of a fetal electrocardiogram in the presence of maternal "noise" signals.

It is known in the art that unwanted noise detected by a primary sensor can be mitigated by the use of so-called "signal-free" reference sensors, which receive only the noise and not the signal. The output of the signal-free reference sensors is used in conjunction with the output of the primary sensor to derive filter constants which are used to remove the noise components from the output of the primary sensor. It has been recognized that it is advantageous to use more than a single reference sensor when there is more than a single independent source of noise to be cancelled. It has also been recognized, however, that there is a limit on the number of reference sensors that can be used. It is a problem in the art that there is no known method for ascertaining the precise number of reference sensors that will provide cancellation of all significant noise components of the primary sensor output without compromising the integrity of the signal to be detected. Furthermore, under most circumstances it is not possible to obtain a reference sensor reading which is totally free of the primary signal. Known noise-cancelling techniques have a tendency to amplify the effects of small amounts of a primary signal which are detected by the reference sensors to the point of cancelling the signal to be detected.

One prior art publication by Widrow et al. entitled "Adaptive Noise Cancelling: Principles and Applications" proceedings of the IEEE, Volume 63, No. 12, December 1975, describes an arrangement for cancelling noise by the use of a primary sensor and one or more signal-free reference sensors in the generation of a fetal electrocardiogram. Each reference sensor output is used, together with primary sensor information, for determining constants for the so-called Wiener filter. The Wiener filter is used to filter the references prior to subtracting the filtered reference outputs from the primary output in order to generate a representation of the true signal without the undesired components. Widrow et al. use the Wiener filter on each of the references separately in an attempt to remove from the primary sensor output signal components identified from the outputs of the signal-free reference sensors. Widrow et al. indicate that it is not clear how many of the signal-free reference sensors should be used. One problem in the art is that if too few references are used, not all significant noise components will be removed from the signal. A specific problem of the prior approaches is that if more references are used than there are independent noise sources, the Wiener filter algorithm receives too much mutually coherent reference sensor information, and matrices used in the computation of the filter constants become ill-conditioned or rank deficient. This results in poorly defined filter constants or causes the computation to break down completely. Another problem with this prior art approach is that in practice, the so-called signal-free references may in fact be influenced by the primary signal to be detected. The effect of even a small amount of such a signal used in the Wiener filter process may cause the true signal to be cancelled along with the noise, since the purpose of that filter is to remove from the signal all components detected by the reference sensors. The need for a fetal electrocardiogram has been long recognized by doctors, for example, for proper diagnosis of fetal arrhythmia or other fetal cardiac abnormalities. However, no reliable device for the generation of fetal electrocardiograms has been developed in the prior art.

Another prior art publication by Cao Changxiu entitled "A New Algorithm for Adaptive Noise Cancellation Using Singular Value Decomposition" Acta Automatica Sinica Volume 12, No. 2, April 1986, describes a noise-cancelling method using a single reference sensor. The output of this sensor is passed through one or more time delays to make it available over varying time intervals. The values so obtained are configured in a matrix and singular value decomposition is proposed to reduce the matrix, treating certain values as zero. This publication deals with statistical dependence or independence of a single sensor output when examined over several time intervals. It does not address the problem of excessive mutually coherent information coming from several reference sensors used to detect a plurality of noise sources.

Other prior art references such as a publication by van Oosterom et al. entitled "Removing the Maternal Component in the Fetal ECG Using Singular Value Decomposition" Electrocardiology '83: Proceedings of the 10th International Congress on Electrocardiology, Bratislava, Czechoslovakia, August 14, 1983, are concerned with the application of singular value decomposition to noise cancelling in a multi-reference environment. That publication proposes applying the singular value decomposition technique to a matrix of computed values derived both from the primary sensor output and outputs from a plurality of references. One problem with this prior art approach is that it is difficult to predict which of the values resulting from the singular value decomposition are derived from the primary source and which are derived from the reference sources. No precise way of separating the primary signal contribution from the reference signal contributions is proposed in the publication.

Another prior art publication, authored by Longini et al. entitled "Near-Orthogonal Basis Functions: 5 A Real Time Fetal ECG Technique", IEEE Transactions on Biomedical Engineering, Volume BME-24, No. 1, January 1977, discusses the application of orthogonal basis functions to a reference matrix of values derived from signals from a plurality of reference sources. One problem with this prior art is that it does not deal with the problems resulting from the inclusion of small amounts of the primary signal in the reference signals or excessive mutually coherent information from several reference sensors.

US Patent 4 781 200 discloses a fetal monitoring system comprising at least one primary sensor and a plurality of reference sensors, wherein the sensor signals are transformed from the time domain to the frequency domain, interferring signals are removed by adaptive cancellation operations and the processed signal is transformed back into the time domain.

### SUMMARY OF THE INVENTION

These and other problems of the prior art are overcome in accordance with the present invention as claimed in an arrangement employing at least one primary signal detector and a number of "signal-free" reference signal detectors, by eliminating the detrimental effects resulting from the inclusion of certain amounts of the primary signal in the "signal-free" reference sensor outputs and eliminating reference sensor contributions which do not represent independent noise sources, prior to determining filter constants. The filter constants are used to condition the reference outputs before they are subtracted from the primary sensor output to generate a noise-cancelled output signal. In accordance with one aspect of the invention, the computation of filtering constants to be used in the filtering algorithm involves setting thresholds on the computation process and eliminating from the computation values falling below the threshold. Advantageously, in accordance with this invention, the number of reference sensors selected can be safely increased to where no additional possible noise sources might be included as a result of adding another reference. A further advantageous result is that this invention avoids inadvertent cancellation of major signal components due to inclusion of small amounts of the true signal in the reference sensor outputs and the uncertainty of results in the prior art when more reference detectors are used than there are actual noise sources.

In accordance with one aspect of the invention, an output signal representative of the primary source signal to be detected is generated by deriving correlation data for the several reference outputs and using the correlation data to generate information defining filter constants representing certain linear combinations of reference outputs. Only those source contributions to reference sensors for which correlation values exceed a predetermined threshold value are taken into account in defining the filter constants.
Contributions falling below the threshold are eliminated from consideration. The filter constants are applied to the reference outputs, and the filtered reference outputs are subtracted from the primary output in order to remove the effect of noise sources from the primary output. Correlation data of small magnitude, when compared to other correlation data values, may be eliminated from the filter constant computation process, since the small value data do not represent any independent noise sources. Furthermore, primary source signal values included in small value correlation data, where such signal values may have significant influence, are advantageously eliminated.

In one specific embodiment of the invention, a primary source detector and a plurality of reference detectors are used to generate a noise-corrected sonar hydrophone output. A large number of reference detectors are used to assure that all significant noise sources are detected and detector signal contributions which do not represent independent noise sources are eliminated. Cross-correlation data based on signals received from the various reference detectors is used to construct a cross-spectral density matrix. Using a known orthogonalization procedure, the matrix is solved and eigenvalues of the reduced matrix falling below a predetermined threshold value are eliminated, thereby eliminating reference signal contributions from the primary signal source and from reference sensors not representing independent noise sources. The remaining values of the reduced matrix are used in combination with reference-to-primary sensor correlation data to define filter constants. The filter constants are applied to power-spectral density data pertaining to the reference sensors in a known manner in order to remove signal contributions equivalent to those detected by the reference sensors. Advantageously, using a large number of reference detectors and eliminating those signal contributions which do not represent independent noise sources provides greatly improved output signals for sonar detection and for other applications where a primary signal is present in the presence of a variety of noise sources.

In another embodiment of the invention, the invention is employed in the generation of a fetal electrocardiogram representative of the true cardiac activity of the fetus. In this embodiment, a plurality of primary sensors are used in the abdominal area of a pregnant woman to generate a plurality of traces for a fetal electrocardiogram. A relatively large number of reference sensors are positioned in other areas of the woman's body to detect noise resulting from the heartbeat of the woman and other noise sources. The outputs from the reference sensors and the primary sensors are multiplexed and applied to a digital computer, where a cross-correlation matrix is constructed defining cross-correlation values based on the outputs of the reference sensors. The matrix is solved using a known singular value decomposition technique and correlation values below a predetermined threshold are eliminated. The remaining values of the reduced matrix are used to define filter constants which are applied to the reference sensor outputs and the filtered outputs are subtracted from the primary sensor outputs to define the fetal heartbeat signals. The computer synthesizes fetal output signals and applies the synthesized output signals to an electrocardiograph output or other recording device, to produce a fetal electrocardiogram. Advantageously, as many sensors as desired may be used in an environment where it is not known how many noise sources will influence a signal, since redundancy of the reference sensor outputs is eliminated by this invention.

The invention may advantageously be employed in a variety of noise-cancellation applications where a primary signal is to be detected in the presence of multiple noise sources or noise modes beyond the exemplary applications discussed herein. The invention may, for example, be advantageously used in heart transplant electrocardiography to generate an electrocardiogram of nerve center activity of the old heart in the presence of much stronger signals from the transplanted heart. Other areas of application for the invention include such areas as sound detection, telephony, radar, television, etc., wherein a signal is to be detected in a noisy environment. The invention may also be advantageously used in active noise cancellation wherein a detected noise signal is cancelled by a synthesized complementary signal.

### BRIEF DESCRIPTION OF THE DRAWINGS

The invention is described with reference to the drawings in which:
FIG. 1 is a block diagram representation of an illustrative system for generating a fetal electrocardiogram employing one or more fetal sensors and a plurality of reference sensors and a computer for synthesizing a waveform representative of fetal heart activity;
FIG. 2 is an illustrative flow chart diagram representing functions executed by the computer of FIG. 1;
FIG. 3 is a block diagram representation of a memory array used by the computer of FIG. 1;
FIGS. 4 and 5 are representations of matrices used in the computation of the synthesized waveform;
FIG. 6 is a block diagram representation of an illustrative system for generating a graph of a detected underwater signal, employing one or more hydrophones and a plurality of reference sensors and including a computer for synthesizing waveforms;
FIGS. 7A and 7B form an illustrative flow chart representation of functions executed by the computer of FIG. 6 in the generation of the synthesized waveforms;
FIGS. 8 and 9 are graphs showing curves representing power spectral density of a noise source using different computational thresholds.

### DETAILED DESCRIPTION

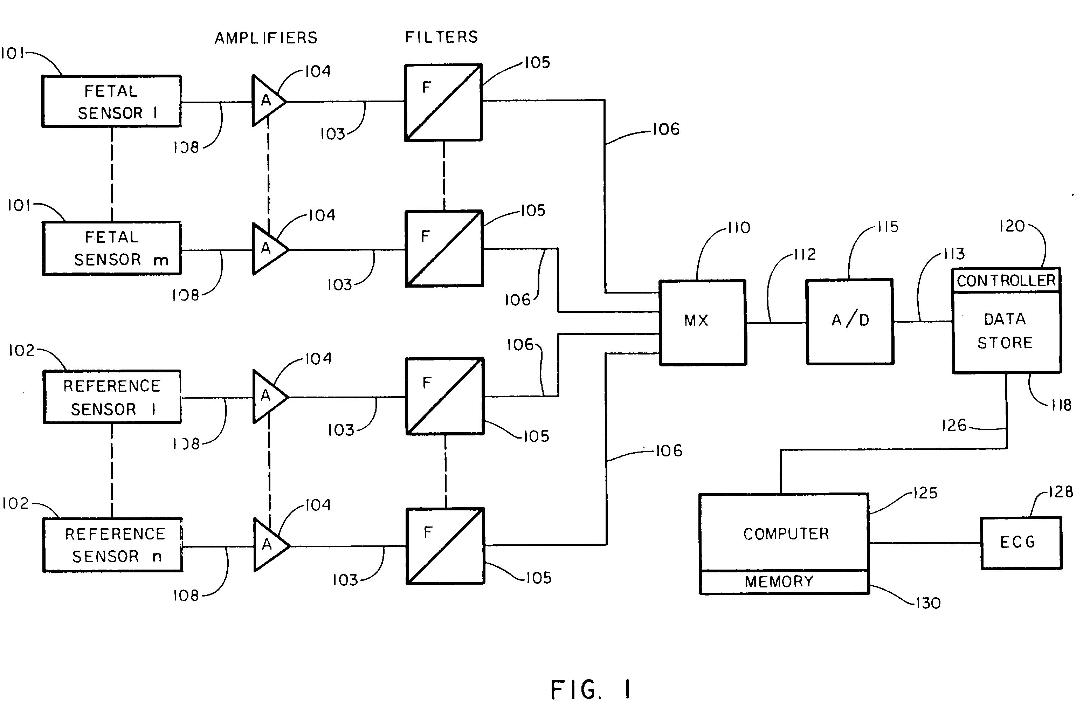

FIG. 1 is a block diagram representation of an arrangement for producing a fetal electrocardiogram. The system includes a plurality (m) fetal sensors 101, placed in the abdominal region of a pregnant female, to detect the fetal heartbeat signals which are to be reproduced in the electrocardiogram. The number of primary sensors equals the number of independent fetal signal indications desired for the electrocardiogram. The system employs a plurality (n) reference sensors 102. By way of example, 10 reference sensors may be placed on various parts of the body of the woman away from the abdominal region. These reference signals will be used to detect independent noise sources within the female body and the environment in which the recording of the electrocardiogram takes place. The exact number of reference sensors 102 is not critical, as long as enough sensors are used to detect the significant independent noise sources influencing the output of the fetal sensors 101. The greater the number of references, however, the greater will be the computer computation time for noise cancelling. Major noise sources to be detected stem from the activity of the maternal heart. Other sources may include physiological signals stemming from other muscular actions such as breathing or the like. The noise sources may also be expected to include electrical line noise, instrumentation error, etc. Each of the fetal sensors 101 and the reference sensors 102 will pick up some linear combination of all of the many sources. In the system according to the invention, a signal for each of the fetal sensors 101 is computed, by means of computer 125, with reference to all of the reference sensors but independent of the other of the fetal sensors. In a typical situation, one of the fetal sensors 101 in the abdominal area may receive a signal on the order of 20 percent which results from the fetal heartbeat and 80 percent from other sources, mostly the maternal heartbeat. In the generation of the final output signal, the output of one of the fetal sensors will be modified taking into account the composite effect of all of the outputs of the reference sensors 102, but not including the least significant linear combinations of the reference sensor outputs.

The fetal sensors 101 and reference sensors 102 may be commercially available sensors typically used in the production of electrocardiograms. The signals detected by each of the sensors 101 and 102 are transmitted to amplifiers 104 via conductors 108 and amplified by means of amplifiers 104. These are preferably well-known, variable-gain amplifiers used to provide a calibrated amplified signal to the system. Amplifiers 104 are connected to filters 105 by means of conductors 103. Filters 105, which are well-known, low-frequency band-pass filters, are provided in order to avoid disturbances due to aliasing of higher frequency signals. Filters 105 are connected to a well-known multiplex circuit 110 via conductors 106. The analog filter outputs are multiplexed and transmitted to a well-known analog-digital (A-to-D) convertor 115 via conductor 112. The A-to-D convertor will convert the multiplexed analog information to digital data words at a specified sampling rate, e.g., 256 waveform samples per second. The digital data generated by the A-to-D convertor 115 is transmitted via conductor 113 to a data store 118. The data store 118 includes a controller 120 which controls the storing of the data from the sensors in a file together with header information identifying the patient, time of recordation, etc. Controller 120 arranges the multiplexed digital sensor information in data records which are read from the data store 118 by computer 125 via bus 126, and operated upon by the computer to define a synthesized output signal representative of the fetal heartbeat. The computer 125 controls graphics printer 128 to generate the desired fetal electrocardiogram.

The computer 125 performs noise cancelling to generate a synthesized output signal for each of the fetal sensors 101. Noise cancelling removes from the outputs of the fetal sensors 101 specific signal components computed on the basis of the outputs from the plurality of reference sensors 102 without being affected by redundant reference outputs. Noise cancelling may be done either in the frequency domain or in the time domain. In the frequency domain, time-averaged sensor outputs are transformed, for example, by means of Fast Fourier Transforms into the frequency domain, and a matrix of cross-spectral densities of the sensor outputs is constructed in a well-known manner. Such a matrix is known to possess so-called Hermitian symmetry. In time domain, reference sensor outputs are used to construct a matrix of correlation values in a well-known manner. The matrix records correlations between, for example, output of a sensor A at time t and output of another sensor B, taken a time delay tau later. Thus, signal components first appearing at sensor A and later appearing at sensor B will be reflected in the correlation matrix.

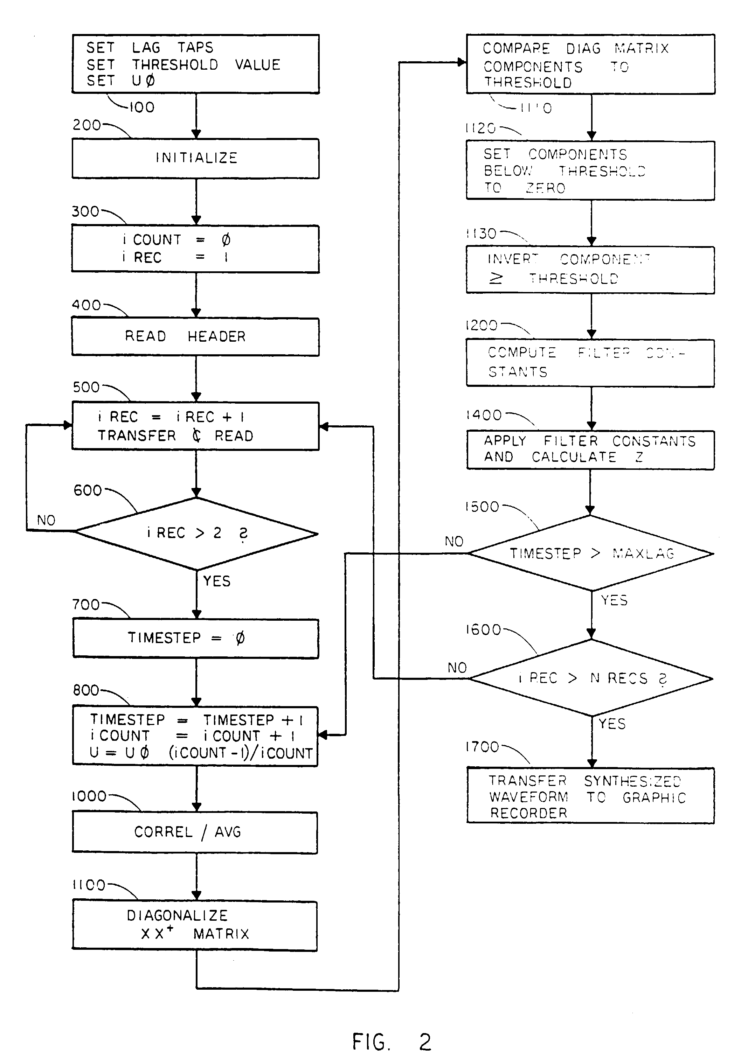

FIG. 2 is a flow chart representing steps taken by computer 125 in generating a fetal electrocardiogram using time domain analysis. The data stored in the data store 118 comprises several records of data for each of the sensors covering several time periods. The computer 125 reads a record including data for one of the m fetal sensors 101 and for all of the n reference sensors 102 for a specific time period. Each such record comprises several time slices, e.g., 256 sampling times per second. The computer computes filter constants on the basis of correlations among the reference sensor outputs for a number of time delays. A correlation matrix is constructed and, using the singular value decomposition technique, the matrix is reduced to a diagonal form, with the singular values appearing on the diagonal. The resultant singular value components are then compared to a threshold value and low-value components are eliminated. The combined filter constants are applied to the stored reference outputs which are subtracted from one of the fetal sensor outputs in order to generate a signal component for the time period covered by the computation. Thereafter, the process is repeated for each of a number of timesteps until fetal signal components for each of the timesteps in a record, which may cover, for example, ten seconds of time, have been computed. A noise-cancelled fetal output signal for the selected fetal sensor is synthesized accordingly. This process is repeated for each of the fetal sensors.

FIG. 2, at block 100, shows the setting of lag taps. The lag taps define the time period to be used in determining correlation among the outputs of the selected primary sensor and reference sensors 1 through n. For example, if the waveform is sampled at the A-to-D convertor 115 at the rate of 256 samples per second, taps may be spaced linearly over the period of one second, taken, for example, every 20th reading, or log-periodically, for example, 1, 2, 4, 8, 16 . . . . Other values may be selected, depending to some extent on the variation expected in the signal over time. Block 100 further indicates the setting of threshold values to be used in eliminating singular value components of low value after decomposition of the correlation matrix. Thresholds are defined in terms of the largest singular value in the matrix after decomposition. It may, for example, be set at one percent of the largest value (-20 dB) or at .01 percent (-40 dB). If the threshold is set too low, the probability of including small components of the true signal is increased. If it is set too high, significant noise sources may be excluded from the noise cancellation algorithm. Block 100 also indicates setting a value of U0. In this illustrative embodiment, the Wiener filter algorithm is used to perform noise cancellation. Constants for the Wiener filter may be calculated adaptively employing a damping process. One way to control the adaptive damping process is to update the correlations in block 1000 each timestep by use of a moving average which controls the amount of history which is retained. In this illustrative embodiment, the damping constant U = U0 · (icount - 1) / icount. The value U0 is set in block 100 in this illustrative embodiment to 0.1. The value of icount is incremented each time computations of filter constants is initiated for a different timestep. Alternatively, the Wiener filter constants may be generated in a nonadaptive manner by computing a fixed set of averages of the correlations for all timesteps and using these to construct a single set of Wiener filters.

In block 200 of FIG. 2, the memory to be used for correlation matrices is set to zero to avoid computational errors. In block 300, counters in the program are initialized. Block 400 indicates the reading of record header information from the data store which includes patient identification, number of references recorded, etc. In block 500 a first data record is read from the data store 118. The record includes data gathered over a number (e.g., 256) timesteps from reference sensors 1 through n shown at 102 in FIG. 1 and one of the fetal sensors. A first such record is read into a one-area memory referred to as an upper array. By means of decision block 600, a loop is made back to block 500 to transfer the priorly read record to a lower memory array and to read a second record into the upper array.

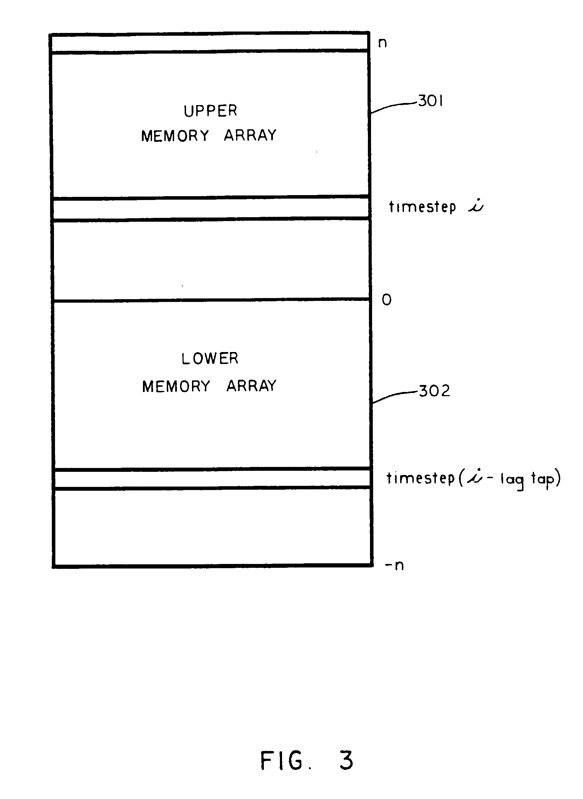

FIG. 3 is a representation of upper and lower memory arrays in memory 130. In block 500, the information from the upper array is transferred into the lower array and a record is read into the upper array 301. This step is executed a second time by return from block 600 to block 500 to move the first record into the lower memory array and read a second record into the upper memory array. A record may, for example, include collected information corresponding to one second of time. At a sampling rate of 256 hertz at the analog-to-digital convertor 115, one second of data comprises 256 timesteps. Correlation data and filter constants are computed in blocks 1000 through 1200 for each such timestep using the lag taps set in block 100 in order to generate correlation data based on a comparison of data in the upper memory array, for example, at timestep i with data occurring a period equivalent to lag tap earlier. The earlier data may occur in the same record (i.e., in the upper memory array 301) or in the earlier record (i.e., in the lower memory array 302).

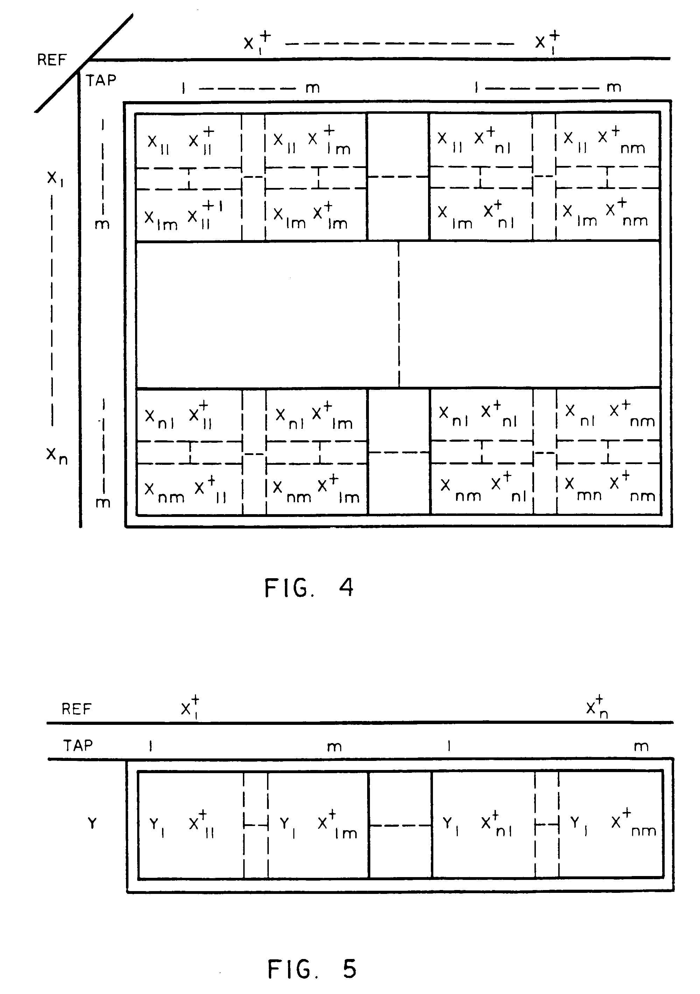

In block 700, a value referred to as timestep is initialized for later use. An advance is made to block 800 where the value timestep is incremented to keep track of the timestep of the current record for which a signal component is computed. In block 800, the value of icount is incremented and a damping constant U is computed. Upon the first entry into block 800, the damping constant is zero, since there is no history to use in a moving average. The value of icount is incremented in block 800 such that the moving average will be modified each time block 800 is entered, i.e., each time a new timestep is selected. In block 1000, a correlation matrix is generated showing correlation between each of the references at a specified time and all of the other references at a point in time defined by the lag taps initiated in block 100. FIG. 4 is a representation of a reference correlation matrix for n separate references, X₁ through Xₙ, showing the correlation of each reference with itself and all other references, shown symbolically as X⁺ ₁ through X⁺ ₙ. The matrix presents correlation values of XX⁺ at m separate delay times. By way of example, value X₁₁X⁺ ₙₘ represents the correlation value of reference 1 at delay time 1 with reference n at delay time m. The values of XX⁺ may be averaged using the moving average defined by the value of u specified in block 800. Fig. 5 represents a matrix of correlation output values of one of the fetal sensors Y with outputs of each of the reference sensors X₁ through Xₙ at m delay times.

After generation of a correlation matrix in block 1000, an advance is made to block 1100 where the matrix is diagonalized. In this illustrative embodiment, the singular value decomposition process, which is a well-known process described in mathematical texts, is used to reduce the matrix to a singular value diagonal matrix. Other known techniques, such as the so-called Gram-Schmidt procedure, are available for matrix decomposition. In block 1110, all components of the singular value diagonal matrix are compared against the threshold set in block 100, e.g., one percent of the largest component present in the diagonal matrix. In block 1120, all components below the threshold are set to zero. This excludes from the filtering process those components representing mutually coherent noise sources and those low-value components which include a component of the primary signal. The latter would cause cancellation of the corresponding primary signal component if included in the application of the unconstrained Wiener filter algorithm. In block 1130, the remaining matrix components, i.e., those greater than or equal to the threshold, are inverted to derive the pseudo-inverse of the diagonalized matrix. In block 1200, the pseudo-inverse values are used together with the YX⁺ matrix values to compute the Wiener filter constants for each reference and for each delay tap. In block 1400, the filter constants computed in block 1200 are applied to the reference sensor outputs, and filtered reference outputs are subtracted from the output of the primary sensor under consideration. In this manner, a noise-cancelled fetal output signal is generated for a selected one of the fetal sensors 102 for one timestep.

If the test in block 1500 indicates that additional timesteps are to be handled, a return is made to block 800 where timestep and icount are incremented. A new moving average is also computed using an incremented value of icount. Thereafter a transfer is made to block 800 and new filter constants are computed for the same lag taps used for the previous timestep, and a signal is again calculated using the selected filter algorithm as indicated in block 1400. This sequence is repeated until all timesteps for the record read into the upper memory array in block 500 have been handled. Thereafter, in block 1600 a test is made to determine whether additional records are to be read. If so, the previous record will be transferred from the upper memory array to the lower memory array, and a new record will be read into the upper array. When all selected records have been handled, the values for Z computed in block 1400 are transmitted by the computer as a synthesized waveform to the graphic recorder for production of an electrocardiogram. The process of FIG. 2 is repeated for each of the m fetal sensors 101 in order to generate m electrocardiogram output traces.

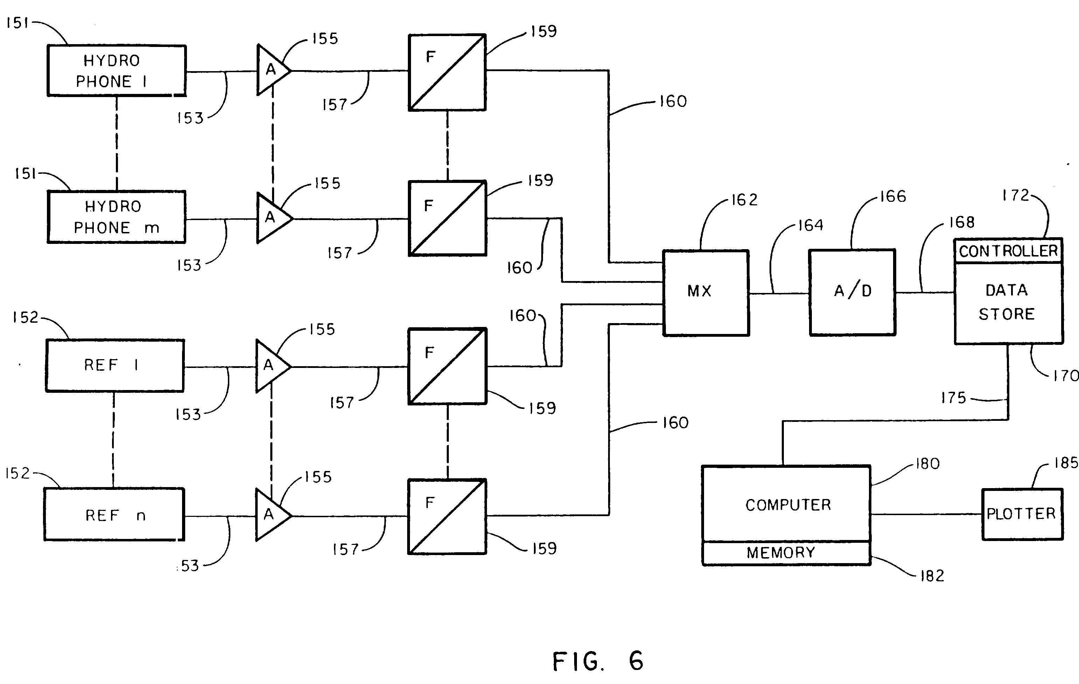

FIG. 6 is a block diagram representation of an illustrative embodiment of a system for performing noise cancellation on an underwater signal and for generating a graphical representation of the signal. A plurality of m hydrophones 151 may be used in order to produce representations of the signal at different locations. A plurality of n reference sensors 152 are employed to provide reference sensor outputs used in the noise cancelling. The hydrophones 151 and reference sensors 152 are each connected to an amplifier 155 via a conductor 153. The amplifiers are preferably variable-gain amplifiers for calibrating the output signals. The amplified signal is filtered by means of filters 159 connected to the amplifiers 155 by conductors 157. Filters 159 are preferably low-frequency band-pass filters used to prevent aliasing of high-frequency signals. The filters 159 are connected via conductors 160 to a multiplex circuit 162 in which the filtered analog signals are multiplexed and the multiplex output signal is transmitted to an analog-to-digital convertor 166 via conductor 164. The digital data output representing multiplexed hydrophone and reference sensor outputs is transmitted to a data store 170 via conductor 168. The data store 170 includes a controller 172. The controller stores the data in the data store 170 in the form of data records, wherein each record includes a header identifying the operational conditions, the number of associated records, etc., and each record contains a component of the output of one of the hydrophones 151 and of outputs of each of the reference sensors 152. A computer 180 is used in the noise-cancelling operation. It reads records of data from the head data store by data bus 175 and stores such records in its memory 182 for analysis purposes. Data representing a synthesized output signal is transmitted to a plotter 185 to produce an output graph.

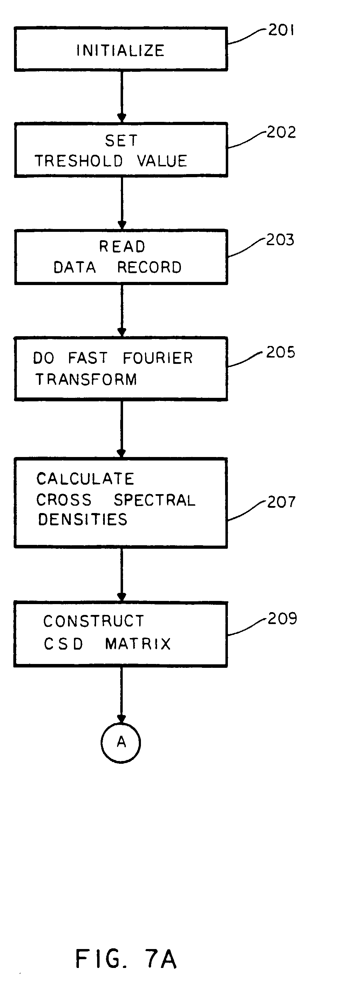

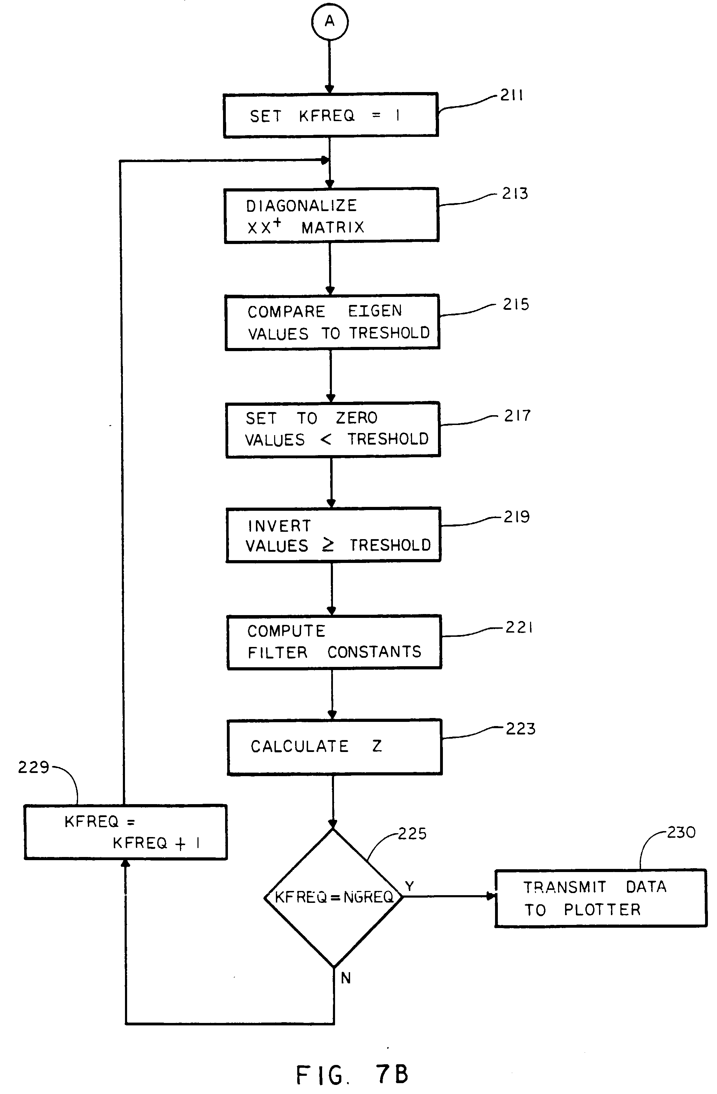

FIGS. 7A and 7B form a flow chart representation of an illustrative set of functions performed by the computer 180 in performing noise cancellation. The computer initializes certain memory locations as indicated in block 201 of FIG. 7A, particularly setting a memory area to be used for the construction of a cross-spectral density matrix to zero to avoid possible computational errors. In block 202, a threshold value is set to be used in evaluating eigenvalues for inclusion or exclusion in the computation of filter constants. The computer 180 reads a data record from the data store 170 and stores the record in its memory 182 for computational purposes, and indicated in block 203. In block 205, a Fast Fourier Transform is performed on the record obtained in block 203. Optionally, a window function may be applied to the record prior to performing the transform. In block 207, the cross-spectral density contribution from that record is computed in the frequency domain and added to the existing total. Based on the frequency domain values, a cross-spectral density matrix is constructed defining cross-spectral density values for each reference sensor output with respect to itself and all other reference sensor outputs at some particular frequency. The terms of the matrix are denoted by XX⁺, where the ⁺ refers to the Hermitian or transpose-conjugate operator. A similar matrix is constructed of cross-spectral density values of one of the hydrophones Y with respect to each of the reference sensors X₁ through Xₙ.

In block 211 of FIG. 7B, a quantity identified as KFREQ is set equal to one, for later use in the computation. In block 213, the XX⁺ matrix is diagonalized using the singular value decomposition or Gram-Schmidt matrix reduction technique. In block 215, the eigenvalues of the diagonalized matrix are compared against the threshold value (e.g., one percent of the largest eigenvalue). In block 217, all those eigenvalues falling below the threshold are set to zero, and in block 219 values greater than or equal to the threshold are inverted. In this manner, the pseudo-inverse of the diagonalized matrix is computed while excluding contributions from small eigenvalues. The small eigenvalues represent either small contributions of signal or noise or represent non-independent noise sources. Accordingly in this manner, small contributions originating from the signal to be detected are excluded, thereby avoiding full or partial cancellation of the signal, and only significant independent noise sources are included in the generation of the noise-cancelled signal. In block 221, filter constants for the Wiener filter are computed in a known fashion, and in block 223, the filter constants are used in conjunction with the outputs of a selected one of the hydrophones to calculate a noise-cancelled signal Z at a particular frequency. In decision block 225, a determination is made as to whether other frequencies are included in the record obtained in block 203, by comparing the value of KFREQ to NFREQ, which represents the total number of frequency samples in the record. If additional frequency samples are to be considered, the value of KFREQ is incremented in block 229 and a return is made to block 213 to execute the sequence of actions of block 213, 215, 217, 219, and 221 to calculate another signal component Z, for the additional frequency sample, in block 223. In this illustrative embodiment, the cross-spectral density matrix constructed in block 209 covers a plurality of frequencies and in block 213, only those matrix components relating to the particular frequency in question is diagonalized.

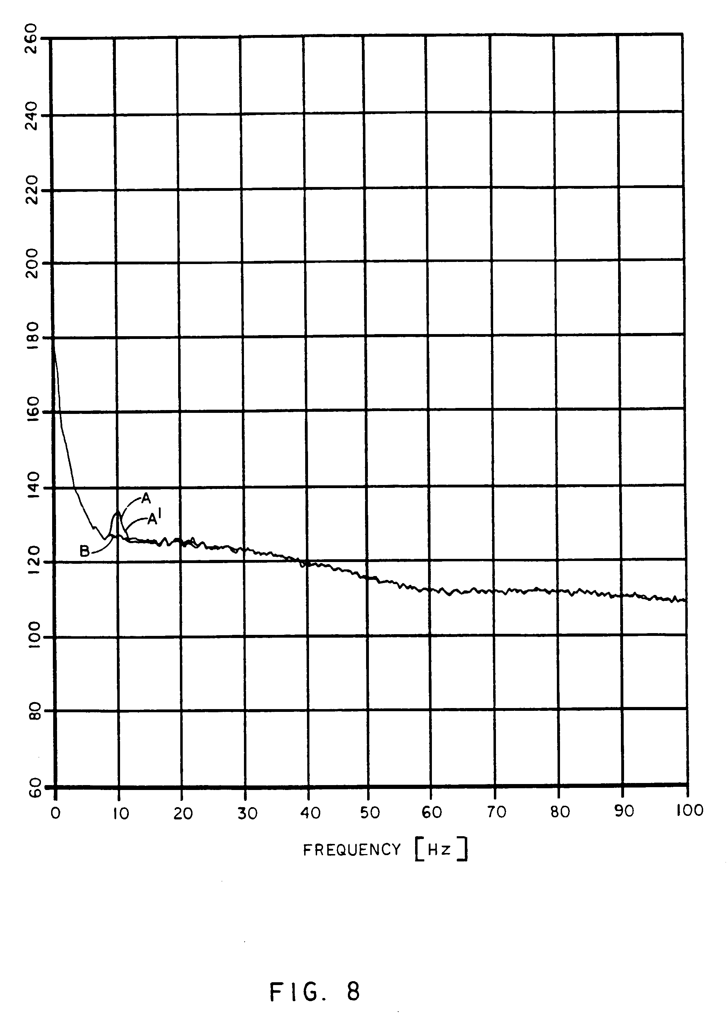

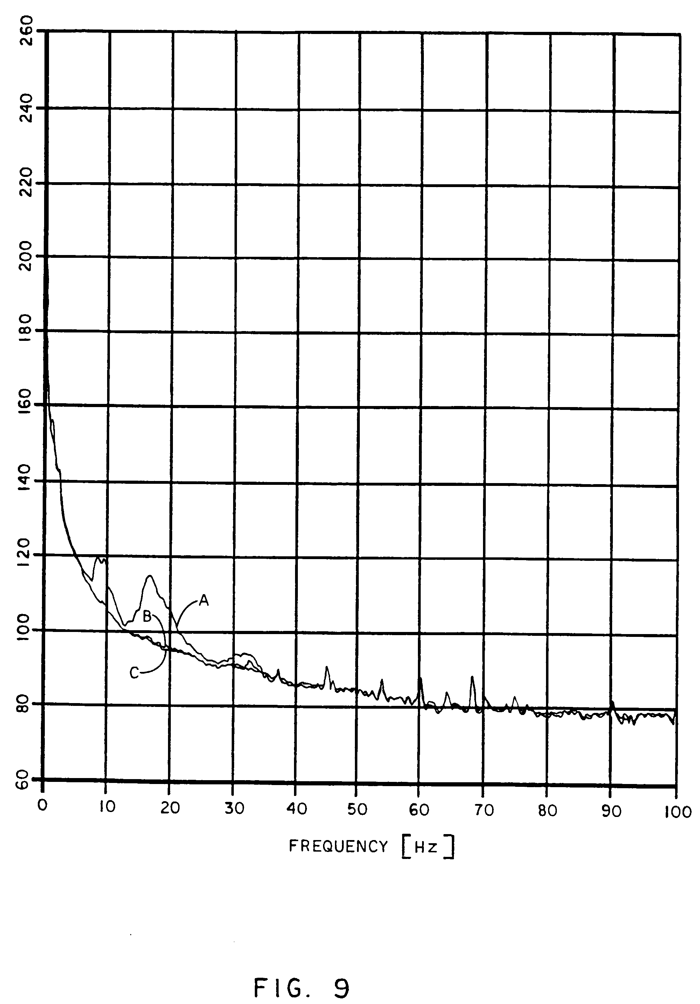

In one particular experiment, filter constants were computed from the same data using different threshold values, as described with respect to FIGS. 7A and 7B, in the generation of a power spectral density graph. FIGS. 8 and 9 show such graphs depicting the power spectral density as a function of frequency. FIG. 8 represents cross-spectral density curves using a 20 dB threshold, where the threshold value is one percent of the largest eigenvalue in the computation, and using a 40 dB threshold wherein the threshold is set at 0.01 percent of the largest eigenvalue. Curve A represents the uncorrected signal. A second curve A', substantially coincident with curve A, represents the noise-cancelled signal using a 20 dB threshold. Curve B represents the noise-cancelled signal using a 40 dB threshold. Curve B shows departure from the other curves in the 10-hertz region. The uncorrected curve A indicates the presence of a noise contribution at 10 hertz. The same contribution occurs in the curve representing the noise-cancelled signal using the 20 dB threshold. That contribution, however, has been eliminated using the 40 dB threshold as shown by curve B. An examination of the original data shows the presence of a noise source at approximately 30 dB at 10 hertz. By setting the threshold at -40 dB, this noise source was eliminated, while it was not eliminated when the threshold was set at the -20 dB level. It is therefore readily apparent that more noise signals will be detected by setting the threshold lower. However, the computer used to execute the Wiener algorithm may not have an accuracy compatible with data representing one part in ten thousand of the largest eigenvalue, or -40 dB. Furthermore, real data may be accurate to only one percent so that a 20 dB threshold may be more reasonable than the 40 dB threshold. Moreover, it is always important to quantify the extent to which the so-called "signal-free" references may pick up a portion of the signal to be detected. If it can be assumed that such a signal will be less than one percent of the noise source output sensed by the reference sensor, then a 20 dB threshold would protect the signal from being cancelled.

FIG. 9 represents cross-spectral density curves using a 20 dB threshold and a 40 dB threshold using computational data representing the output of a different experimental run than used in the computation of FIG. 8. Curve A of FIG. 9 shows the uncorrected signal while curves B and C represent noise-cancelled signals using a 20 dB and a 40 dB threshold, respectively. The results of the cancellation using the two thresholds is substantially identical except in the area around 33 hertz where a somewhat greater noise cancellation is indicated using the 40 dB threshold. It is apparent from FIG. 9, that the uncorrected signal represented by curve A has been substantially modified in the noise-cancellation process, using either the 20 or the 40 dB threshold for filter computation purposes. For example, in the region from about 8 hertz to slightly over 30 hertz, substantial noise cancellation has taken place as indicated by the significant difference between the uncorrected signal curve A and corrected signal curves B and C which are nearly coincident over the greater part of the indicated region.

Referring to FIGS. 7A and 7B, an alternative implementation for performing noise cancellation involves executing the steps of the flow chart of FIGS. 7A and 7B up through the computation of filter constants with respect to a particular frequency as in block 221. Then, instead of calculating the value Z, the values of the computed filter constants are stored within the memory of the computer and a test such as indicated in block 225 is made to determine whether other frequencies are included in the record obtained in block 203. If so, the value of KFREQ is incremented as indicated in block 229 and a return is made to block 213, as indicated in FIG. 7B to generate filter constants for additional frequencies. When the filter constants for all of the frequencies have been computed and stored in terms of frequency domain values, the data record or a segment thereof is obtained from the memory and a Fast Fourier Transform is performed on the data record to bring the data into the frequency domain. Thereafter, the stored filter data are applied to the data record and the frequency domain results are brought back into the time domain by means of an inverse Fast Fourier Transform. The time domain results may then be transmitted to a data plotter to obtain a filtered output plot in the time domain. The filter constants may be computed over segments of the data record which are chosen on an overlapping basis, in a known fashion. After all of the filter constants have been computed and stored,-they may be applied to segments of the same data record in the frequency domain and the latter named segments need not be the same as the segments chosen for the purpose of generating the filter constants.

## Claims

1. A method of generating a noise cancelled output signal in a system comprising at least one primary sensor (101) for detecting a primary signal and a plurality of reference sensors (102) for detecting noise source signals, wherein a primary sensor output is detected from said at least one primary sensor and a reference sensor output is detected from each of said reference sensors, characterised by the steps of:
calculating correlation data for said reference sensor outputs;
generating filter constants using correlation data which exceed a predetermined threshold value;
modifying each of said reference sensor outputs by said filter constants to generate modified reference sensor outputs; and
subtracting said modified reference sensor outputs from said primary sensor output to generate a noise cancelled output signal.

2. A method according to claim 1 wherein a matrix of correlation data derived from said reference sensor outputs is constructed, said matrix is converted to a diagonal matrix, and elements of said diagonal matrix having a value less than said predetermined threshold value are eliminated.

3. A method according to claim 2 wherein said threshold value is greater than signal contributions to said diagonal matrix elements.

4. A method according to claim 2 wherein said threshold value is defined with reference to the value of at least one of said diagonal matrix elements.

5. A method of generating an electrocardiogram representative a foetal heartbeat according to any one of the preceding claims, further comprising the steps of:
placing at least one primary sensor (101) on the abdominal area of a pregnant female in the proximity of the fetus;
placing a plurality of reference sensors (102) in other regions of the female body to detect signals generated by sources other than the foetal heart; and
producing an electrocardiogram representing said noise cancelled output signal.

6. A method according to claim 1 wherein:
said primary sensor output is compared with each of said reference sensor outputs to generate primary comparison data;
a matrix of correlation data derived from said reference sensor outputs is constructed;
said matrix is mathematically reduced to diagonal form to derive a reduced matrix; and
said step of generating filter constants comprises combining components of said reduced matrix having values greater than said predetermined threshold with said primary comparison data.

7. A method according to claim 6 wherein said step of calculating correlation data comprises comparing a reference sensor output at a specified time with other reference sensor outputs at a different specified time.

8. A method according to claim 6 or 7 wherein said step of mathematically reducing said matrix of correlation values comprises using a singular value decomposition algorithm.

9. A method according to any one of the preceding claims wherein said plurality of sensors (102) comprises a number greater than the number of significant independent noise sources.

10. A method according to claim 6 wherein said matrix of correlation values comprises time correlation values.

11. A method according to claim 6 wherein said matrix of correlation values comprises cross-spectral density values.

12. A method according to claim 11 wherein:
said sensor outputs are transformed into the frequency domain ;
said matrix of cross-spectral density values is constructed and mathematically reduced to diagonal form to derive a reduced matrix;
said filter constants are generated and subtracted from the frequency domain reference sensor outputs to generate said modified reference sensor outputs; and
said modified reference sensor outputs are subtracted from the frequency domain primary sensor output and the difference values obtained thereby are transformed from the frequency domain into the time domain to generate a time domain representation of a noise cancelled primary signal

13. A method for generating a noise cancelled primary signal in a noisy environment according to claim 1 wherein:
said primary sensor output and said reference sensor outputs are detected over a predetermined period of time;
a plurality of time delays is defined;
primary correlation data is derived by comparing said primary sensor output at a specified time with all of said reference sensor outputs at a time delayed from said specified time by said time delay;
correlation data for said reference sensor outputs is derived by comparing each of said reference sensor outputs at a specified time with all of said reference outputs at a time delayed from said specified time by said time delay;
a matrix having as the matrix components data values representing said correlation data for said reference sensor outputs is constructed;
said matrix is mathematically reduced to a diagonal matrix having diagonal matrix components;
diagonal matrix components having values greater than said threshold value are inverted;
said filter constants are generated using the inverted diagonal matrix components and said primary correlation data;
said modified reference sensor outputs are subtracted from said primary sensor output to generate data representing said noise cancelled primary signal; and
said noise cancelled primary signal is synthesised.

14. Apparatus for generating an output signal representative of a signal source comprising:
at least one primary sensor (101) for generating primary sensor output signal;
a plurality of reference sensors (102) each for generating a reference sensor output signal; characterised by:
computer apparatus (125) for receiving the primary sensor output signal and the reference sensor output signals and, responsive to receipt of the reference sensor output signals, to calculate correlation data for the reference sensor output signals, to generate filter constants using correlation data which exceed a predetermined threshold and to filter the received reference sensor output signals by means of said filter constants; and wherein :
the computer (125), responsive to a received primary sensor output signal, generates a system output signal by subtracting from the primary sensor output signal components corresponding to the filtered reference signals.

15. Apparatus according to claim 14 wherein the computer is further responsive to receipt of the reference sensor output signals to construct a matrix of reference signal correlation data and to generate the filtered reference signals using only matrix values greater than the predetermined threshold value.

16. Apparatus according to claim 15 further comprising a graphical display output device (128) responsive to the system output signal for graphically displaying a representation of the system output signal.

## Patentansprüche

1. Verfahren zum Erzeugen eines rauschunterdrückten Ausgangssignals in einem System mit mindestens einem Primärsensor (101) zum Erzeugen eines Primärsignals und einer Mehrzahl von Referenzsensoren (102) zum Erfassen von Rauschquellensignalen, wobei ein Primärsensorausgangssignal von mindestens einem Primärsensor detektiert wird,
und ein Referenzsensorausgangssignal von jedem der Referenzsensoren detektiert wird, **gekennzeichnet durch**
die Schritte des:
Berechnens von Korrelationsdaten für die Referenzsensorsignale;
Erzeugens von Filterkonstanten unter Verwendung von Korrelationsdaten, die einen vorgegebenen Schwellenwert überschreiten,
Modifizierens jedes der Referenzsensorausgangssignale durch die Filterkonstanten, um modifizierte Referenzsensorausgangssignale zu erzeugen, und
Subtrahierens der modifierzierten Referenzsensorausgangssignale von dem Primärsensorausgangssignal, um ein rauschunterdrücktes Ausgangssignal zu erzeugen.

2. Verfahren nach Anspruch 1, bei dem eine Matrix von Korrelationsdaten, die von den Referenzsensorausgangssignalen hergeleitet wird, konstruiert wird, wobei die Matrix in eine Diagonalmatrix umgewandelt wird und Elemente der Diagonalmatrix, die einen Wert kleiner als der vorgegebene Schwellenwert aufweisen, eliminiert werden.

3. Verfahren nach Anspruch 1, bei dem der Schwellenwert größer als Signalbeiträge zu den Diagonalmatrixelementen ist.

4. Verfahren nach Anspruch 2, bei dem der Schwellenwert in bezug auf den Wert von mindestens einem der Diagonalmatrixelemente definiert ist.

5. Verfahren zum Erzeugen eines Elektrokardiogramms, das für einen Fötusherzschlag repräsentativ ist, nach einem der vorhergehenden Ansprüche, weiterhin mit den Schritten des:
Anordnens mindestens eines Primärsensors (101) auf dem abdominalen Bereich einer schwangeren Frau in der Nähe des Fötus;
Anordnens einer Mehrzahl von Referenzsensoren (102) in anderen Bereichen des weiblichen Körpers, um Signale zu detektieren, die durch andere Quellen als den Fötusherzschlag erzeugt werden, und
Erzeugens eines Elektrokardiogramms, das das rauschunterdrückte Ausgangssignal darstellt.

6. Verfahren nach Anspruch 1, bei dem
das Primärsensorausgangssignal mit jedem der Referenzsensorausgangssignale verglichen wird, um Primärvergleichsdaten zu erzeugen;
eine Matrix von von den Referenzsensorausgangssignalen hergeleiteten Korrelationsdaten konstruiert wird,
die Matrix mathematisch in eine Diagonalform reduziert wird, um eine reduzierte Matrix herzuleiten, und
der Schritt des Erzeugens von Filterkonstanten das Konstruieren von Komponenten der reduzierten Matrix mit Werten größer als die vorgegebene Schwelle mit den Primärvergleichsdaten umfaßt.

7. Verfahren nach Anspruch 6, bei dem der Schritt des Berechnens von Korrelationsdaten das Vergleichen eines Referenzsensorausgangssignals bei einer bestimmten Zeit mit anderen Referenzsensorausgangssignalen bei einer unterschiedlichen bestimmten Zeit umfaßt.

8. Verfahren nach Anspruch 6 oder 7, bei dem der Schritt des mathematischen Reduzierens der Korrelationswerte der Matrix die Verwendung eines Singulärwert-Dekompositionsalgorithmus umfaßt.

9. Verfahren nach einem der vorhergehenden Ansprüche, bei dem die Mehrzahl von Sensoren (102) eine größere Zahl als die Anzahl der signifikanten unabhängigen Rauschquellen umfaßt.

10. Verfahren nach Anspruch 6, bei dem die Matrix der Korrelationswerte Zeitkorrelationswerte umfaßt.

11. Verfahren nach Anspruch 6, bei dem die Matrix der Korrelationswerte kreuz-spektrale Dichtewerte umfaßt.

12. Verfahren nach Anspruch 11, bei dem
die Sensorausgangssignale in den Frequenzbereich transformiert werden,
die Matrix der kreuz-spektralen Dichtewerte konstruiert und mathematisch auf die Diagonalform reduziert wird, um eine reduzierte Matrix herzuleiten,
die Filterkonstanten erzeugt und von den Frequenzbereich-Referenzsensorausgangssignalen subtrahiert werden, um die modifizierten Sensorausgangssignale zu erzeugen, und
modifizierte Referenzsensorausgangssignale von dem Frequenzbereich-Primärsensorausgangssignal subtrahiert werden und die dabei erhaltenen Differenzwerte von dem Frequenzbereich in den Zeitbereich transformiert werden, um eine Zeitbereichsdarstellung des rauschunterdrückten Primärsignals zu erzeugen.

13. Verfahren zum Erzeugen eines rauschunterdrückten Primärsignals in einer verrauschten Umgebung nach Anspruch 1, bei dem
das Primärsensorausgangssignal und die Referenzsensorausgangssignale über einen vorbestimmten Zeitraum detektiert werden,
eine Mehrzahl von Zeitverzögerungen definiert werden,
Primärkorrelationsdaten durch Vergleich des Primärsensorausgangssignals bei einer bestimmten Zeit mit allen Referenzsensorausgangssignalen bei einer Zeit, die zu der bestimmten Zeit um die Zeitverzögerung verzögert ist, hergeleitet werden,
Korrelationsdaten für die Referenzsensorausgangssignale durch Vergleich jedes der Referenzsensorausgangssignale bei einer bestimmten Zeit mit allen den Referenzausgangssignalen zu einem zu der bestimmten Zeit um die Zeitverzögerung verzögerten Zeitpunkt hergeleitet werden,
eine Matrix, die als Matrixkomponenten Datenwerte aufweist, die die Korrelationsdaten für die Referenzsensorausgangssignale darstellen, konstruiert wird,
wobei die Matrix mathematisch auf eine Diagonalmatrix mit diagonalen Matrixkomponenten reduziert wird,
Diagonalmatrixelemente mit Werten größer als der Schwellenwert invertiert werden,
die Filterkonstanten unter Verwendung der invertierten Diagonalmatrixkomponenten und der Primärkorrelationsdaten erzeugt werden,
die modifizierten Referenzsensorausgangssignale von dem Primärsensorausgangssiganl subtrahiert werden, um Daten zu erzeugen, die das rauschunterdrückte Primärsignal darstellen, und
das rauschunterdrückte Primärsignal synthetisiert wird.

14. Vorrichtung zur Erzeugung eines eine Signalquelle repräsentierendes Ausgangssignals mit:
mindestens einem Primärsensor (101) zum Erzeugen eines Primärsensorsignals,
einer Mehrzahl von Referenzsensoren (102), die jeweils ein Referenzsensorausgangssignal erzeugen,
**gekennzeichnet durch**
eine Computervorrichtung (125) zum Empfangen des Primärsensorausgangssignals und der Referenzsensorausgangssignale und zum Berechnen von Korrelationsdaten für die Referenzsensorausgangssignale abhängig vom Empfang der Referenzsensorausgangssignale, um Filterkonstanten unter Verwendung von Korrelationsdaten zu erzeugen, die eine vorbestimmte Schwelle überschreiten, und um die empfangenen Referenzsensorausgangssignale mittels der Filterkonstanten zu filtern, und wobei
der Computer (125) abhängig von einem empfangenen Primärsensorausgangssignal ein Systemausgangssignal durch Subtrahieren von den Primärsensorausgangssignalkomponenten entsprechend den gefilterten Referenzdaten erzeugt.

15. Vorrichtung nach Anspruch 14, bei der der Computer weiter abhängig von dem Empfang der Referenzsensorausgangssignale eine Matrix von Referenzsignalkorrelationsdaten konstruiert, um die gefilterten Referenzsignale zu erzeugen, wobei nur Matrixwerte größer als der vorbestimmte Schwellenwert verwendet werden.

16. Vorrichtung nach Anspruch 15 weiterhin eine von dem Systemausgangssignal abhängige graphische Anzeigeausgabevorrichtung (128) umfassend, um graphisch eine Darstellung des Systemausgangssignal anzuzeigen.

## Revendications

1. Procédé de génération d'un signal de sortie à bruit éliminé dans un système comprenant au moins un capteur primaire (101) pour détecter un signal primaire et une pluralité de capteurs de référence (102) pour détecter des signaux de source de bruit, dans lequel une sortie de capteur primaire est détectée à partir dudit au moins un capteur primaire et une sortie de capteur de référence est détectée à partir de chacun desdits capteurs de référence, caractérisé par les étapes de :
calcul de données de corrélation pour lesdites sorties de capteur de référence ;
génération de constantes de filtre en utilisant des données de corrélation qui excèdent une valeur de seuil prédéterminée ;
modification de chacune desdites sorties de capteur de référence par lesdites constantes de filtre afin de générer des sorties de capteur de référence modifiées ; et
soustraction desdites sorties de capteur de référence modifiées de ladite sortie de capteur primaire pour générer un signal de sortie à bruit éliminé.

2. Procédé selon la revendication 1, dans lequel une matrice de données de corrélation dérivées à partir desdites sorties de capteur de référence est construite, ladite matrice est convertie en une matrice diagonalisée et des éléments de ladite matrice diagonalisée présentant une valeur inférieure à ladite valeur de seuil prédéterminée sont éliminés.

3. Procédé selon la revendication 2, dans lequel ladite valeur de seuil est supérieure à des contributions de signal auxdits éléments de matrice diagonalisée.

4. Procédé selon la revendication 2, dans lequel ladite valeur de seuil est définie par référence à la valeur d'au moins l'un desdits éléments de matrice diagonalisée.

5. Procédé de génération d'un électrocardiogramme représentatif d'un battement de coeur foetal selon l'une quelconque des revendications précédentes, comprenant en outre les étapes de :
placement d'au moins un capteur primaire (101) sur la zone abdominale d'une femme enceinte à proximité du foetus ;
placement d'une pluralité de capteurs de référence (102) dans d'autres régions du corps de la femme pour détecter des signaux générés dans des sources autres que le coeur foetal ; et
production d'un électrocardiogramme représentant ledit signal de sortie à bruit éliminé.

6. Procédé selon la revendication 1, dans lequel :
ladite sortie de capteur primaire est comparée à chacune desdites sorties de capteur de référence pour générer des données de comparaison primaires ;
une matrice de données de corrélation dérivées à partir desdites sorties de capteur de référence est construite ;
ladite matrice est réduite mathématiquement selon une forme diagonalisée pour dériver une matrice réduite ; et
ladite étape de génération de constantes de filtre comprend la combinaison de composantes de ladite matrice réduite présentant des valeurs supérieures audit seuil prédéterminé avec lesdites données de comparaison primaires.

7. Procédé selon la revendication 6, dans lequel ladite étape de calcul de données de corrélation comprend la comparaison d'une sortie de capteur de référence à un instant spécifié avec d'autres sorties de capteur de référence à un instant spécifié différent.

8. Procédé selon la revendication 6 ou 7, dans lequel ladite étape de réduction mathématique de ladite matrice de valeurs de corrélation comprend l'utilisation d'un algorithme de décomposition de valeurs singulières.

9. Procédé selon l'une quelconque des revendications précédentes, dans lequel ladite pluralité de capteurs (102) comprend un nombre de capteurs supérieur au nombre de sources de bruit indépendantes significatives.

10. Procédé selon la revendication 6, dans lequel ladite matrice de valeurs de corrélation comprend des valeurs de corrélation temporelles.

11. Procédé selon la revendication 6, dans lequel ladite matrice de valeurs de corrélation comprend des valeurs de densité à spectres croisés.

12. Procédé selon la revendication 11, dans lequel :
lesdites sorties de capteur sont transformées dans le domaine des fréquences ;
ladite matrice de valeurs de densité à spectres croisés est construite et réduite mathématiquement selon une forme diagonalisée pour dériver une matrice réduite ;
lesdites constantes de filtre sont générées et soustraites des sorties de capteur de référence du domaine des fréquences pour générer lesdites sorties de capteur de référence modifiées ; et
lesdites sorties de capteur de référence modifiées sont soustraites de la sortie de capteur primaire du domaine des fréquences et les valeurs de différence ainsi obtenues sont transformées du domaine des fréquences dans le domaine temporel afin de générer une représentation dans le domaine temporel d'un signal primaire à bruit éliminé.

13. Procédé de génération d'un signal primaire à bruit éliminé dans un environnement de bruit selon la revendication 1, dans lequel :
ladite sortie de capteur primaire et lesdites sorties de capteur de référence sont détectées sur une période temporelle prédéterminée ;
une pluralité de retards temporels est définie ;
des données de corrélation primaires sont dérivées en comparant ladite sortie de capteur primaire à un instant spécifié à toutes lesdites sorties de capteur de référence à un instant retardé par rapport audit instant spécifié dudit retard temporel ;
les données de corrélation pour lesdites sorties de capteur de référence sont dérivées en comparant chacune desdites sorties de capteur de référence à un instant spécifié avec toutes lesdites sorties de référence à un instant retardé par rapport audit instant spécifié dudit retard temporel ;
une matrice comportant en tant que composantes de matrice des valeurs de données représentant lesdites données de corrélation pour lesdites sorties de capteur de référence est construite ;
ladite matrice est réduite mathématiquement selon une matrice diagonalisée comportant des composantes de matrice diagonalisée ;
des composantes de matrice diagonalisée présentant des valeurs supérieures à ladite valeur de seuil sont inversées ;
lesdites constantes de filtre sont générées en utilisant des composantes de matrice diagonalisée inversée et lesdites données de corrélation primaires ;
lesdites sorties de capteur de référence modifiées sont soustraites de ladite sortie de capteur primaire pour générer des données représentant ledit signal primaire à bruit éliminé ; et
ledit signal primaire à bruit éliminé est synthétisé.

14. Appareil de génération d'un signal de sortie représentatif d'une source de signal comprenant :
au moins un capteur primaire (101) pour générer un signal de sortie de capteur primaire ;
une pluralité de capteurs de référence (102) dont chacun est prévu pour générer un signal de sortie de capteur de référence,
caractérisé par :
un appareil d'ordinateur (125) pour recevoir un signal de sortie de capteur primaire et des signaux de sortie de capteur de référence et, en réponse à la réception des signaux de sortie de capteur de référence, pour calculer des données de corrélation pour les signaux de sortie de capteur de référence afin de générer des constantes de filtre en utilisant des données de corrélation qui excèdent un seuil prédéterminé et afin de filtrer les signaux de sortie de capteur de référence reçus au moyen desdites constantes de filtre ; et dans lequel :
l'ordinateur (125), en réponse à un signal de sortie de capteur primaire reçu, génère un signal de sortie système en soustrayant du signal de sortie de capteur primaire des composantes correspondant aux signaux de référence filtrés.

15. Appareil selon la revendication 14, dans lequel l'ordinateur est en outre sensible à la réception des signaux de sortie de capteur de référence pour construire une matrice de données de corrélation de signal de référence et pour générer les signaux de référence filtrés en utilisant seulement des valeurs matricielles supérieures à la valeur de seuil prédéterminée.

16. Appareil selon la revendication 15, comprenant en outre un dispositif de sortie par affichage graphique (128) sensible au signal de sortie système pour afficher graphiquement une représentation du signal de sortie système.
